# EUROPÄISCHE PATENTSCHRIFT

(11) **EP 3 158 462 B1**
(45) Veröffentlichungstag und Bekanntmachung des Hinweises auf die Patenterteilung: **19.05.2021**
(21) Anmeldenummer: 15750992.8
(22) Anmeldetag: 12.08.2015
(51) Int. Cl.: G06F 16/245

(54) **GERÄT MIT KOMMUNIKATIONSSCHNITTSTELLE UND VERFAHREN ZUR STEUERUNG EINES DATENBANKZUGRIFFS**
DEVICE WITH INTERFACE AND METHOD TO CONTROL DATABASE ACCESS
APPAREIL AVEC UNE INTERFACE DE COMMUNICATION ET PROCÉDÉ DE COMMANDE D'UN ACCÈS À DES BANQUES DE DONNÉES

(30) Priorität: 22.09.2014 DE 102014219090
(43) Veröffentlichungstag der Anmeldung: 26.04.2017
(73) Patentinhaber: Siemens Aktiengesellschaft, 80333 München (DE)
(72) Erfinder: KÄBISCH, Sebastian, 86163 Augsburg (DE); PEINTNER, Daniel, I-39037 Meransen Mühlbach (IT)
(86) Internationale Anmeldenummer: PCT/EP2015/068512
(87) Internationale Veröffentlichungsnummer: WO 2016/045863

(56) Entgegenhaltungen:
- RUMEN KYUSAKOV ET AL: "Integration of Wireless Sensor and Actuator Nodes With IT Infrastructure Using Service-Oriented Architecture", IEEE TRANSACTIONS ON INDUSTRIAL INFORMATICS, IEEE SERVICE CENTER, NEW YORK, NY, US, Bd. 9, Nr. 1, Februar 2013 (2013-02), Seiten 43-51, XP011482884, ISSN: 1551-3203, DOI: 10.1109/TII.2012.2198655
- RUMEN KYUSAKOV ET AL: "Efficient XML Interchange in factory automation systems", IECON 2011 - 37TH ANNUAL CONFERENCE ON IEEE INDUSTRIAL ELECTRONICS SOCIETY, IEEE, 7. November 2011 (2011-11-07), Seiten 4478-4483, XP032105168, DOI: 10.1109/IECON.2011.6120046 ISBN: 978-1-61284-969-0
- RUMEN KYUSAKOV ET AL: "Integration of Wireless Sensor and Actuator Nodes With IT Infrastructure Using Service-Oriented Architecture", IEEE TRANSACTIONS ON INDUSTRIAL INFORMATICS, IEEE SERVICE CENTER, NEW YORK, NY, US, vol. 9, no. 1, 1 February 2013 (2013-02-01), pages 43-51, XP011482884, ISSN: 1551-3203, DOI: 10.1109/TII.2012.2198655
- RUMEN KYUSAKOV ET AL: "Efficient XML Interchange in factory automation systems", IECON 2011 - 37TH ANNUAL CONFERENCE ON IEEE INDUSTRIAL ELECTRONICS SOCIETY, IEEE, 7 November 2011 (2011-11-07), pages 4478-4483, XP032105168, DOI: 10.1109/IECON.2011.6120046 ISBN: 978-1-61284-969-0
- Sheldon L Snyder: "Efficient XML Interchange (EXI) compression and performance benefits : development, implementation and evaluation", , 31 March 2010 (2010-03-31), XP055629205, Retrieved from the Internet: URL:http://calhoun.nps.edu/bitstream/handl e/10945/5422/10Mar_Snyder.pdf [retrieved on 2019-10-07]
- 2a02:2c40:400:0:64a2:51f:461:5b67: "Triplestore", , 12 September 2014 (2014-09-12), XP055666841, Retrieved from the Internet: URL:https://en.wikipedia.org/w/index.php?t itle=Triplestore&oldid=625227194 [retrieved on 2020-02-10]

## Beschreibung

Die Erfindung betrifft eine Gerät mit Kommunikationsschnittstelle gemäß Ansprüchen 1-8. Die Erfindung betrifft auch ein Verfahren zur Steuerung eines Datenbankzugriffs gemäß der Ansprüche 9 and 10, sowie ein Computerprogrammprodukt gemäß Anspruch 11.

Im Stand der Technik sind Beschreibungssprachen zur Spezifikation von Datenformaten und der für eine Bearbeitung der Daten benötigten Verfahren bekannt. Eine bekannte Beschreibungssprache ist »Extensible Markup Language«, abgekürzt XML, mit welcher hierarchisch strukturierte Daten in Textform oder Plain Text beschrieben werden. Die Beschreibungssprache XML wird für einen plattformunabhängigen Austausch von Daten zwischen Rechnersystemen eingesetzt. Aufgrund der textuellen Natur von XML ist diese sowohl durch Maschinen als auch durch Menschen lesbar.

Häufig ist ein schneller Datenaustausch zwischen Rechnersystemen erforderlich, welcher mit einer textuellen Beschreibungssprache wie XML nicht zu erreichen ist. Daher wurden binäre Repräsentationen von XML vorgeschlagen. Eine als »Efficient XML Interchange«, abgekürzt EXI, bezeichnete Binärrepräsentation von XML ist im Vergleich zu textbasierten XML-Daten schneller zu verarbeiten und benötigt weniger Übertragungsbandbreite beim Datenaustausch zwischen Rechnersystemen. Eine Anwendung von EXI ist im Übrigen nicht allein auf eine Binärrepräsentation von XML beschränkt, EXI kann als Austauschformat zur Übermittlung beliebiger semistrukturierter Daten eingesetzt werden.

Das Austauschformat EXI entfaltet insbesondere Vorteile bei einer Verwendung in XML-basierten Anwendungen mit Einsatz eines Mikrokontrollers mit begrenztem Speicherplatz- und Rechenleistungsangebot. Geräte, welche auf Basis von Mikrokontrollern arbeiten, beispielsweise intelligente Sensoren in einer Fertigungslinie oder in einem Fahrzeug, sind üblicherweise für eine gerätinterne Bearbeitung von Daten in einem textbasierten XML-Format eingerichtet, tauschen diese Daten über entsprechende Kommunikationsschnittstellen jedoch üblicherweise auf Basis von Binärdaten, insbesondere Binärdaten gemäß EXI-Spezifikationen, untereinander aus.

Das XML-Format bietet neben der komprimierteren Binärdaten-übertragung auch den Vorteil, textbasierte Ressourcenbezeichnungen nach einer ersten Übertragung als Zeichenkette fortan mit einer kompakten Identifikationsnummer zu referenzieren und bei einer weiteren Übertragung die Identifikationsnummer anstatt der textbasierten Ressourcenbezeichnungen zur Bezeichnung von Ressourcen zu verwenden. Hierzu ist auf beiden Seiten der Übertragung eine Pflege von Ressourcentabelle bzw. »EXI String Tables« vorgesehen. Dies ermöglicht eine noch kompaktere Übertragung des sogenannten EXI Streams bzw. EXI-Datenstroms zwischen beiden Kommunikationsschnittstellen der Übertragungspartner zu können.

Die mit EXI zu übertragenden Daten werden üblicherweise aufgrund einer Anforderung aus einer Datenbank eines Kommunikationspartners entnommen. Anschließend wird der EXI-Datenstrom dynamisch in einem Speicherbereich erzeugt. Im Zuge dieser Erzeugung werden die auf die gespeicherten Daten fallweise Aktualisierungen angewendet, z.B. durch Hinzufügung oder Löschung von Daten. Die so aktualisierten Daten werden von einem Kodierer bzw. EXI Prozessor dann in einen EXI-Datenstrom konvertiert, woraufhin dieser EXI-Datenstrom über eine Kommunikationsschnittstelle an den Kommunikationspartner übertragen wird.

Erst im Zuge einer Erzeugung des EXI-Datenstroms wird die senderseitige Ressourcentabelle bzw. »EXI String Table« durch den Kodierer aufgebaut. Diese ad hoc-Erzeugung des EXI-Datenstroms und der Ressourcentabelle im Zuge einer Anfrage erfordert in nachteilhafter Weise einen erhöhten Speicherplatz- und Rechenleistungsbedarf.

Weiterhin hat das derzeitige Verfahren zur Erzeugung des EXI-Datenstroms den Nachteil, dass sowohl in der Ressourcentabelle als auch in der Datenbank eine Mehrzahl von Ressourcenbezeichnungen in Textform gespeichert ist, wobei diese redundante Speicherplatzbelegung insbesondere bei Einsatz eines Mikrokontrollers mit begrenztem Speicherplatz- und Rechenleistungsangebot nachteilig ist, für den durch eine Verwendung des Austauschformats EXI an sich eine Einsparung des Speicherplatzbedarfs erzielt werden sollte.

Herkömmliche Geräte mit Kommunikationsschnittstellen, bei denen das Gerät für eine geräteinterne Bearbeitung von Daten in einem Textformat eingerichtet ist und die Kommunikationsschnittstelle zum Austausch von Binärdaten eingerichtet ist, zeigen die Dokumente "RUMEN KYUSAKOV ET AL: "Integration of Wireless Sensor and Actuator Nodes With IT Infrastructure Using Service-Oriented Architecture", IEEE TRANSACTIONS ON INDUSTRIAL INFORMATICS, IEEE SERVICE CENTER, NEW YORK, NY, US, Bd. 9, Nr. 1, 1. Februar 2013 (2013-02-01), Seiten 43-51, XP011482884, ISSN: 1551-3203, DOI: 10.1109/TII.2012.2198655", "RUMEN KYUSAKOV ET AL: "Efficient XML Interchange in factory automation systems", IECON 2011 - 37TH ANNUAL CONFERENCE ON IEEE INDUSTRIAL ELECTRONICS SOCIETY, IEEE, 7. November 2011 (2011-11-07), Seiten 4478-4483, XP0321 05168, DOI: 10.1109/IECON.2011.6120046, ISBN: 978-1-61284-969-0", und Sheldon L Snyder: "Efficient XML Interchange (EXI) compression and performance benefits : development, implementation and evaluation",, 31. März 2010 (2010-03-31), XP055629205,Gefunden im Internet:URL:http://calhoun.nps.edu/bitstream/ handle/10945/5422/10Mar_Snyder.pdf. Die vorliegende Erfindung ist vor die Aufgabe gestellt, Mittel zu schaffen, durch welche in einem für eine gerätinterne Bearbeitung von Daten in einem Textformat eingerichteten Gerät, welches über eine zum Austausch von Binärdaten eingerichtete Kommunikationsschnittstelle verfügt, eine Reduzierung des derzeit für die Erzeugung und den Austausch von Binärdaten erforderlichen Speicherplatz- und Rechenleistungsbedarfs erzielt werden kann.

Die Aufgabe wird ausgehend von dem Gerät gemäß dem Oberbegriff des Anspruchs 1 durch dessen kennzeichnende Merkmale gelöst.

In einem für eine gerätinterne Bearbeitung von Daten in einem Textformat eingerichteten Gerät, welches über eine zum Austausch von Binärdaten eingerichtete Kommunikationsschnittstelle verfügt, ist in fachüblicher Weise ein Kodierer zur wechselseitigen Umsetzung der Binärdaten in Textformat-Daten vorgesehen, wobei der Kodierer eingerichtet ist zur Zuordnung von Ressourcenbezeichnungen mit einer jeweiligen Identifikationsnummer. Diese Zuordnung wird über eine vom Kodierer verwaltete Ressourcentabelle verwaltet, in der einer jeweiligen Ressourcenbezeichnung in Textform eine jeweiligen Identifikationsnummer zugeordnet ist. Weiterhin verfügt das Gerät in fachüblicher Weise über mindestens eine gerätinterne Datenbank zur Speicherung von Ressourcen und deren Beziehungen zueinander.

Erfindungsgemäß ist eine Datenbankzugriffssteuerungseinheit vorgesehen, welche sowohl Zugriff auf die Datenbank als auch auf die Ressourcentabelle hat. Durch eine Zentralisierung der Ressourcentabelle wird in vorteilhafter Weise eine redundante Speicherung von Ressourcenbezeichnungen vermieden.

Eine weitere erfindungsgemäße Maßnahme sieht vor, die Datenbankzugriffssteuerungseinheit so zu gestalten, dass eine zu speichernden Ressource anhand der zugeordneten Identifikationsnummer anstatt der Ressourcenbezeichnung referenziert wird.

Diese vorteilhafte Maßnahme gewährleistet in Zusammenwirkung mit der Zentralisierung der Ressourcentabelle, dass in der Datenbank lediglich eine jeweilige Identifikationsnummer zur Referenzierung der Ressource gespeichert werden muss. Eine Identifikationsnummer ist beispielsweise im Datenformat Integer vorgehalten, welche im Vergleich mit einer als Zeichenkette vorzuhaltenden Ressourcenbezeichnung einen weitaus geringeren Speicherbedarf benötigt. Die nachteilige redundante Speicherung der Ressourcenbezeichnung sowohl in der Datenbank als auch in der Ressourcentabelle ist damit erfindungsgemäß beseitigt.

Ein weiterer Vorteil der Erfindung besteht darin, dass der Rechenaufwand zum Vergleich der Ressourcenbezeichnung in einem Parse-Verfahren bzw. String-Comparison-Verfahren sinkt. Eine Erstellung der Binärdaten und somit eine Antwortzeit auf eine Anfrage sinkt mit Anwendung der erfindungsgemäßen Maßnahmen somit erheblich.

Darüber hinaus sinkt der mit der vormals redundanten Datenhaltung benötigte Rechenaufwand zur Durchführung der String-Comparison-Verfahren, welcher vormals sowohl vor der Datenbankzugriffssteuerungseinheit zur Durchsuchung der Datenbank als auch von Seiten des Kodierers zur Durchsuchung der Ressourcentabelle erforderlich war.

Die Erfindung ist von der Überlegung getragen, die in der Datenbank verwalteten Daten schon so weit wie möglich den EXI-Konventionen anzupassen, also so in einer EXI-nahen Form zu speichern, um einerseits die Vorteile von EXI nutzen zu können und andererseits gut auf Aktualisierungs- und Löschoperationen reagieren zu können.

Die Aufgabe wird weiterhin durch ein Verfahren mit den Merkmalen des Patentanspruchs 9 gelöst.

Gemäß dem erfindungsgemäßen Verfahren zur Steuerung eines Datenbankzugriffs, in einem für eine gerätinterne Bearbeitung von Daten in einem Textformat eingerichteten Gerät mit einer zum Austausch von Binärdaten, insbesondere gemäß EXI-Spezifikationen und gemäß Ansprüchen 1-8, eingerichteten Kommunikationsschnittstelle sind folgende Schritte vorgesehen:
- Entgegennahme einer Anforderung zur Speicherung einer Ressource in einer gerätinternen Datenbank, wobei die Anforderung die Ressource anhand einer Ressourcenbezeichnung in einem Textformat charakterisiert;
- Entnahme einer der zu speichernden Ressource zugeordneten Identifikationsnummer aus einer zumindest teilweise einem Kodierer zugeordneten Ressourcentabelle; und;
- Speicherung der Ressource anhand der zugeordneten Identifikationsnummer anstatt der Ressourcenbezeichnung.

Die Aufgabe wird weiterhin durch ein Computerprogrammprodukt mit den Merkmalen des Patentanspruchs 12 gelöst. Das Computerprogramm wird in einem Prozessor abgearbeitet, welcher mit der Abarbeitung das Verfahren ausführt.

Weitere Ausgestaltungen der Erfindung sind Gegenstand der abhängigen Patentansprüche.

Gemäß einer Ausgestaltung der Erfindung ist vorgesehen, im Fall einer Schreibzugriffsanforderung eine der Schreibzugriffsanforderung zugeordnete Ressourcenbezeichnung zu entnehmen, in der Ressourcentabelle eine der Ressourcenbezeichnung zugeordnete Identifikationsnummer zu identifizieren und diese zugeordnete Identifikationsnummer in einem in der Datenbank vorgesehenen Feld für die zu speichernde Ressource zu speichern. Diese Ausgestaltung der Erfindung gewährleistet in vorteilhafter Weise eine oben beschriebene Reduktion der Anzahl an Parse- bzw. String-Comparison-Operationen auf eins, wobei im weiteren Verlauf mit der Identifikationsnummer als Referenz auf die Ressource verfahren wird.

Gemäß einer Ausgestaltung der Erfindung ist vorgesehen, für den Fall einer in der Ressourcentabelle nicht zu identifizierenden Ressourcenbezeichnung einen neuen Eintrag in der Ressourcentabelle anzulegen, durch den die nicht zu identifizierende Ressourcenbezeichnung als neue Ressourcenbezeichnung eingetragen wird und dieser neuen Ressourcenbezeichnung eine neue Identifikationsnummer zugeordnet wird. Diese Ausgestaltung der Erfindung gewährleistet eine zusätzliche Entlastung des Kodirers, welcher schon vor einer Anfrage bezüglich einer Ressource davon entlastet wird, zum Zeitpunkt einer Generierung des EXI-Datenstroms einen neuen Eintrag in der Ressourcentabelle anzulegen.

Gemäß einer Ausgestaltung der Erfindung ist vorgesehen, bei einem Lesezugriff die der zu lesenden Ressource zugeordnete Identifikationsnummer aus der Datenbank zu entnehmen und an den Kodierer zu übergeben. Diese Maßnahme gewährleistet, dass ein im Zuge einer Anfrage erforderlicher Lesezugriff bereits die für den Kodierer vorteilhafte Identifikationsnummer. Der Kodierer wird damit in vorteilhafter von seiner bisher notwendigen Aufgabe befreit, diese Identifikationsnummer zum Zeitpunkt der Generierung des EXI-Datenstroms unter Anwendung einer rechenintensiven Parse- bzw. String-Comparison-Operation aus der Ressourcentabelle zu entnehmen.

Gemäß einer Ausgestaltung der Erfindung ist vorgesehen, dass die Ressourcen und deren Beziehungen mindestens ein Subjekt, mindestens ein Prädikat und mindestens ein Objekt umfassen. Diese Maßnahme gewährleistet eine Datenhaltung gemäß einem vorteilhaften »Resource Description Framework« mit weiterer vorteilhafter Verwendung einer als Triplestore ausgestalteten Datenbank.

Gemäß einer Ausgestaltung der Erfindung ist vorgesehen, Ressourcen, insbesondere Objekte, welche anstatt einer Ressourcenbezeichnung einen Datenwert enthalten, als Datenwert mit einer Beschreibung des Datentyps in der Datenbank zu speichern. Sind die Werte von Ressourcen keine Textdaten, also z.B. vom Datentyp Integer, Gleitkommazahl bzw. Float, Boolean, etc., werden diese »type-aware« durch ein standardisiertes EXI type-encoding- Format kodiert. Diese Maßnahme gestattet eine raschere und speichereffizientere Bearbeitung der in einen EXI-Datenstrom einzubeziehenden Ressourcen durch den Kodierer.

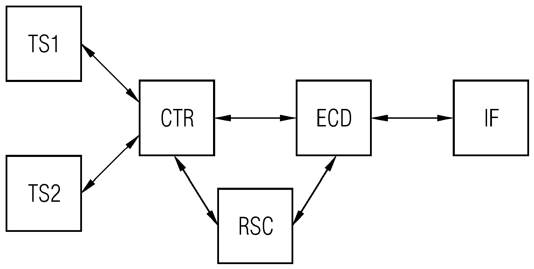

Im Folgenden werden weitere Ausführungsbeispiele und Vorteile der Erfindung anhand der Zeichnung näher erläutert. Dabei zeigt die FIG eine schematische Darstellung von Funktionseinheiten eines Geräts, welche an einer Datenspeicherung und einem Datenaustausch über eine Kommunikationsschnittstelle beteiligt sind.

Die FIG zeigt in nicht abschließender Weise Funktionseinheiten eines Geräts, unter diesen eine erste und einen zweite gerätinterne Datenbank TS1,TS2, eine Datenbankzugriffssteuerungseinheit CTR, eine Ressourcentabelle RSC, einen Kodierer ECD sowie eine Kommunikationsschnittstelle IF.

Weiterhin ist im Ausführungsbeispiel gemäß der Zeichnung eine Ressourcentabelle RSC vorgesehen, welche über die Datenbankzugriffssteuerungseinheit CTR sowie über den Kodierer ECD ausgelesen bzw. beschrieben werden. In alternativen Ausführungsformen können auch mehrere Ressourcentabellen vorgesehen sein, insoweit diese sowohl von einer der Datenbankzugriffssteuerungseinheiten CTR als auch vom Kodierer ECD verwaltet werden. Die gegenüber dem Stand der Technik zentralere Rolle, das heißt der Zugriff auf diese sowohl seitens der Datenbankzugriffssteuerungseinheiten CTR als auch des Kodierers ECD ist eine der Kernaspekte der vorliegenden Erfindung. Im Stand der Technik ist lediglich eine Verwaltung der Ressourcentabelle RSC seitens des Kodierers ECD vorgesehen.

Das Ausführungsbeispiel gemäß der Zeichnung sieht exemplarisch zwei Datenbanken TS1,TS2 vor, welche über eine gemeinsame Datenbankzugriffssteuerungseinheit CTR ausgelesen bzw. beschrieben werden. In alternativen Ausführungsformen wird eine beliebige Anzahl an Datenbanken verwaltet, wobei die Verwaltung der Datenbanken alternativ auch durch eine der jeweiligen Datenbank alleine zugeordneten Datenbankzugriffssteuerungseinheit erfolgen kann.

Die über die Kommunikationsschnittstelle IF zu übertragenden Daten werden von der Datenbankzugriffssteuerungseinheit CTR aufgrund einer gerätexternen oder -internen Anforderung aus einer Datenbank TS1, TS2 entnommen und an den Kodierer ECD übergeben, welcher einen binären Datenstrom bzw. EXI-Datenstrom erzeugt und an die Kommunikationsschnittstelle IF ausgibt.

Erfindungsgemäß wird die insoweit zentralisiertere eine Datenbankzugriffssteuerungseinheit CTR mit einem Zugriff sowohl auf die Datenbanken TS1,TS2 als auch auf die Ressourcentabelle RSC vorgesehen. Durch eine Zentralisierung der Ressourcentabelle RSC wird in vorteilhafter Weise eine redundante Speicherung von Ressourcenbezeichnungen vermieden.

Die Datenbankzugriffssteuerungseinheit CTR ist ferner so gestaltet, dass eine zu speichernden Ressource anhand einer zugeordneten Identifikationsnummer anstatt der Ressourcenbezeichnung referenziert wird. Diese vorteilhafte Maßnahme gewährleistet in Zusammenwirkung mit der Zentralisierung der Ressourcentabelle RSC, dass in den Datenbanken lediglich eine jeweilige Identifikationsnummer zur Referenzierung der Ressource gespeichert werden muss. Eine Identifikationsnummer ist beispielsweise im Datenformat Integer vorgehalten, welche im Vergleich mit einer als Zeichenkette vorzuhaltenden Ressourcenbezeichnung einen weitaus geringeren Speicherbedarf benötigt. Die nachteilige redundante Speicherung der Ressourcenbezeichnung sowohl in den Datenbanken TS1, TS2 als auch in der Ressourcentabelle RSC ist somit beseitigt.

Im Folgenden wird eine beispielhafte Ressourcentabelle RSC dargestellt. Die Ressourcentabelle RSC referenziert eine jeweilige Ressourcenbezeichnung in Textform, in der Tabelle: CH für »Charakter«, mit einer Identifikationsnummer, in der Tabelle: ID.

| Ch | ID |
|---|---|
| a | 1 |
| b | 2 |
| c | 3 |
| d | 4 |
| e | 5 |
| f | 6 |
| g | 7 |

Die Ressourcenbezeichnungen a,b,c,d,e stehen dabei für beliebige Zeichenketten, beispielsweise der Form »Temperatur Sensor« oder »measures temperature value with a Kelvin Degree of«.

Die Datenbanken TS1,TS2 speichern Ressourcen und deren Beziehungen zueinander. Die Organisation der gespeicherten Daten beruht auf einem bekannten Datenmodell namens »Resource Description Framework« bzw. RDF. Das Datenmodell RDF weist eine formale Semantik auf, die auf gerichteten Graphen basiert. Daten in RDF sind Aussagen über Ressourcen. Diese Aussagen werden als Tripel modelliert. Die Menge der Tripel bildet einen Graphen. Ein Tripel ist eine Elementaraussage, die aus Subjekt, Prädikat und Objekt besteht. Für die Speicherung von RDF Tripeln in Datenbanken und Datenstrukturen sind Konzepte bekannt, welche in der Fachwelt auch als Triplestore bezeichnet werden. Eine Organisation von Triplestores unterscheidet sich von herkömmlichen Datenbankkonzepten, da ein Ablegen von Tripel in einer herkömmlichen Datenbank, z.B. relationalen Tabelle, für viele Abfragen nicht effizient genug ist. In Geräten, welche mit einem Mikrokontroller mit begrenztem Speicherplatz- und Rechenleistungsangebot ausgestattet sind, wird dieser Triplestore üblicherweise auch als µRDF bezeichnet.

Im Folgenden werden beispielhafte Datensätze in der als Triplestore ausgestalteten Datenbank TS1,TS2 dargestellt. Die Datensätze bzw. Tripel bestehen aus einem Subjekt, in der Tabelle Spalte S, einem Prädikat, in der Tabelle Spalte P, und einem Objekt, in der Tabelle Spalte O.

| S | P | O (TA) |
|---|---|---|
| 1 | 2 | 3 (string) |
| 1 | 2 | 4 (string) |
| 1 | 5 | 22.3 (float) |
| 6 | 5 | 2.4 (float) |
| 6 | 2 | 7 (string) |

Die Ressourcenbezeichnung ist nun nicht ausschließlich, wie im Stand der Technik üblich war, in Textform abgelegt, sondern in Form einer der Ressourcenbezeichnung gemäß der oben gezeigten Ressourcentabelle zugeordneten Identifikationsnummer.

Anhand der obigen Datensätze ist zu erkennen, dass nicht allen Ressource Identifikationsnummern als Referenz auf die zugehörige Ressourcenbeschreibung zugeordnet sind. Ressourcen, insbesondere Objekte, welche anstatt einer Ressourcenbezeichnung einen Datenwert enthalten, sind in der obigen Tabelle alternativ als Datenwert mit einer Beschreibung des Datentyps gespeichert. Der Datentyp, z.B. Integer, Gleitkommazahl bzw. Float, Boolean, etc., wird in obiger Ausführungsform zusammen mit dem Objekt angegeben, in der Tabelle »TA« bzw. »type-aware«.

Ist ein Datentyp allerdings als Zeichenkette »string« definiert, entspricht die durch den Datentyp charakterisierte Ressource gleichwohl eines der Ressourcenbezeichnung gemäß der oben gezeigten Ressourcentabelle zugeordneten Identifikationsnummer.

In obiger Tabelle sind in der Reihenfolge der Einträge der Spalte O folgende Objekte eingetragen:
3 (string), also eine der Ressourcentabelle entnehmbare Zeichenkette mit der Identifikationsnummer »3«, 4 (string), also eine der Ressourcentabelle entnehmbare Zeichenkette mit der Identifikationsnummer »4«, 22.3 (float), also eine Gleitkommazahl mit dem Wert 22,3, 2.4 (float), also eine Gleitkommazahl mit dem Wert 2,4 sowie 7 (string) also eine der Ressourcentabelle entnehmbare Zeichenkette mit der Identifikationsnummer »7«.

Sind die Werte von Ressourcen keine Textdaten, also z.B. vom Datentyp Integer, Gleitkommazahl bzw. Float, Boolean, etc., werden diese »type-aware« durch ein standardisiertes EXI type-encoding- Format kodiert. Diese Maßnahme gestattet eine raschere und speichereffizientere Bearbeitung der in einen EXI-Datenstrom einzubeziehenden Ressourcen durch den Kodierer.

Ein beispielshaftes Tripel - siehe dritte Zeile - weist als Subjekt eine Zeichenkette auf, welche eine gemäß der Ressourcentabelle zuzuordnende Zeichenkette mit der Identifikationsnummer 1 entspricht, mithin der exemplarischen Ressourcenbeschreibung a. Der Datensatz weist als Prädikat eine Zeichenkette auf, welche eine gemäß der Ressourcentabelle zuzuordnende Zeichenkette mit der Identifikationsnummer 5 entspricht, mithin der exemplarischen Ressourcenbeschreibung e. Der Datensatz weist als Objekt eine Gleitkommazahl mit dem Wert 22,3. Dieses Objekt wird also ohne Beteiligung der Ressourcentabelle ermittelt.

Neu in die Datenbank Ressourcen aufzunehmende werden mit bereits bestehenden Ressourcenbeschreibungen und zugeordneten Identifikationsnummer in der Ressourcentabelle abgeglichen, um mehrfache Einträge von Ressourcenbeschreibungen zu vermeiden. Ist eine neu aufzunehmende Ressourcenbeschreibung in der Ressourcentabelle noch nicht vorhanden, wird diese mit einer neuen Identifikationsnummer in der Ressourcentabelle eingetragen.

Unter Anwendung dieser Maßnahmen gestaltet sich die durch den Kodierer ECD vorzunehmende Kodierung der Binärdaten wesentlich einfach, da alle gültigen, als Verweise auf die Ressourcenbeschreibung bzw. Ressource dienenden Identifikationsnummer nicht ad hoc durch den Kodierer erzeugt werden müssen, sondern bereits in jedem einzelnen Datensätzen vorliegen. Dies gestattet ein wesentlich schnelleres Binärdaten-Enkodierungsverfahren.

Die erfindungsgemäße Vorsehung einer »zentralen« Ressourcentabelle zum gemeinsamen Zugriff sowohl von Seiten der Datenbankzugriffssteuerungseinheit CTR als auch vom Kodierer ECD verbietet es, wie oben erläutert, nicht, mehrere Ressourcentabellen vorzusehen. Es erweist sich bei einem größeren Aufkommen an Ressourcenbezeichnungen beispielsweise als vorteilhaft, Werte von Attributen oder Elementen in einer ersten Ressourcentabelle, die Attributnamen oder Elementnamen jedoch in einer zweiten Ressourcentabelle einzutragen. Diese verteilte Hinterlegung widerspricht jedoch nicht dem vorgeschlagenen Prinzip, Ressourcen durch eine eindeutige Identifikationsnummer zu referenzieren.

Die Erfindung betrifft zusammenfassend ein für eine gerätinterne Bearbeitung von Daten in einem Textformat eingerichtetes Gerät, welches über eine zum Austausch von Binärdaten, insbesondere EXI-Daten, eingerichtete Kommunikationsschnittstelle verfügt und einen Kodierer zur wechselseitigen Umsetzung der Binärdaten in Textformat-Daten vorsieht, wobei der Kodierer eingerichtet ist zur Zuordnung von Ressourcenbezeichnungen mit einer jeweiligen Identifikationsnummer. Diese Zuordnung wird über eine vom Kodierer verwaltete Ressourcentabelle verwaltet, in der einer jeweiligen Ressourcenbezeichnung in Textform eine jeweiligen Identifikationsnummer zugeordnet ist. Weiterhin verfügt das Gerät in fachüblicher Weise über mindestens eine gerätinterne Datenbank zur Speicherung von Ressourcen und deren Beziehungen zueinander. Erfindungsgemäß ist eine Datenbankzugriffssteuerungseinheit vorgesehen, welche sowohl Zugriff auf die Datenbank als auch auf die Ressourcentabelle hat. Durch eine Zentralisierung der Ressourcentabelle wird in vorteilhafter Weise eine redundante Speicherung von Ressourcenbezeichnungen vermieden. Eine weitere erfindungsgemäße Maßnahme sieht vor, die Datenbankzugriffssteuerungseinheit so zu gestalten, dass eine zu speichernden Ressource anhand der zugeordneten Identifikationsnummer anstatt der Ressourcenbezeichnung referenziert wird.

Die Erfindung führt gegenüber den im Stand der Technik bekannten Maßnahmen zu schnellere Reaktionszeiten in Bezug auf eine Erstellung des EXI-Datenstroms. Durch eine erfindungsgemäße starke Nähe an der Darstelllung des eigentlichen Austauschformates EXI wird eine effiziente Darstellung und Handhabung der Daten erreicht. Eine zentralisierte Verwaltung der Ressourcenbeschreibung führt zu einer vorteilhaften Vermeidung von Redundanzen und damit zu einem erheblich reduzierten Speicherplatzbedarf.

## Patentansprüche

1. Gerät mit Kommunikationsschnittstelle (IF), das Gerät eingerichtet für eine gerätinterne Bearbeitung von Daten in einem Textformat, die Kommunikationsschnittstelle (IF) eingerichtet zum Austausch von Binärdaten gemäß EXI-Spezifikationen, das Gerät umfassend:
- einen Kodierer (ECD) zur wechselseitigen Umsetzung der Binärdaten in Textformat-Daten, der Kodierer (ECD) eingerichtet zur Zuordnung von Ressourcenbezeichnungen mit einer jeweiligen Identifikationsnummer;
- eine dem Kodierer (ECD) zugeordnete Ressourcentabelle (RSC) zur Zuordnung einer jeweiligen Ressourcenbezeichnung mit einer jeweiligen Identifikationsnummer;
- mindestens eine gerätinterne Datenbank (TS1) zur Speicherung von Ressourcen und deren Beziehungen;
**gekennzeichnet durch**:
- mindestens eine Datenbankzugriffssteuerungseinheit (CTR) mit Zugriff auf die mindestens eine Datenbank (TS1) sowie auf die Ressourcentabelle (RSC), die Datenbankzugriffssteuerungseinheit (CTR) eingerichtet zur Speicherung der der zu speichernden Ressource zugeordneten Identifikationsnummer anstatt der Ressourcenbezeichnung in der mindestens einen geräteinternen Datenbank (TS1); und;
- dass die Datenbankzugriffssteuerungseinheit (CTR) derart eingerichtet ist, bei einem Lesezugriff die der zu lesenden Ressource zugeordnete Identifikationsnummer aus der Datenbank (TS1) zu entnehmen und an den Kodierer (ECD) zu übergeben.

2. Gerät nach Patentanspruch 1, **dadurch gekennzeichnet, dass** die Datenbankzugriffssteuerungseinheit (CTR) derart eingerichtet ist, im Fall einer Schreibzugriffsanforderung eine der Schreibzugriffsanforderung zugeordnete Ressourcenbezeichnung zu entnehmen, in der Ressourcentabelle (RSC) eine der Ressourcenbezeichnung zugeordnete Identifikationsnummer zu identifizieren und diese zugeordnete Identifikationsnummer in einem in der Datenbank (TS1) vorgesehenen Feld für die zu speichernde Ressource zu speichern.

3. Gerät nach Patentanspruch 2, **dadurch gekennzeichnet, dass** die Datenbankzugriffssteuerungseinheit (CTR) derart eingerichtet ist, dass für den Fall einer in der Ressourcentabelle (RSC) nicht zu identifizierenden Ressourcenbezeichnung ein neuer Eintrag in der Ressourcentabelle (RSC) angelegt wird, durch den die nicht zu identifizierende Ressourcenbezeichnung als neue Ressourcenbezeichnung eingetragen wird und dieser neuen Ressourcenbezeichnung eine neue Identifikationsnummer zugeordnet wird.

4. Gerät nach einem der vorgenannten Patentansprüce, **dadurch gekennzeichnet, dass** das Textformat in einem XML-Format gestaltet ist.

5. Gerät nach einem der vorgenannten Patentansprüche, **dadurch gekennzeichnet, dass** die Ressourcen und deren Beziehungen mindestens ein Subjekt, mindestens ein Prädikat und mindestens ein Objekt umfassen.

6. Gerät nach einem der vorgenannten Patentansprüche, **dadurch gekennzeichnet, dass** die Datenbank (TS1) ein Triplestore ist.

7. Gerät nach einem der vorgenannten Patentansprüche **gekennzeichnet durch** die Datenbank (TS1), in der Ressourcen, insbesondere Objekte, welche anstatt einer Ressourcenbezeichnung einen Datenwert enthalten, als Datenwert mit einer Beschreibung des Datentyps in der Datenbank (TS1) gespeichert sind.

8. Gerät nach Patentanspruch 7, **dadurch gekennzeichnet, dass** die Beschreibung des Datentyps in einem EXI-Type-Encoding-Format erfolgt.

9. Verfahren zur Steuerung eines Datenbankzugriffs, in einem für eine gerätinterne Bearbeitung von Daten in einem Textformat eingerichteten Gerät gemäß einem der Ansprüche 1-8, umfassend folgende Schritte:
- Entgegennahme einer Anforderung zur Speicherung einer Ressource in einer gerätinternen Datenbank (TS1), wobei die Anforderung die Ressource anhand einer Ressourcenbezeichnung in einem Textformat charakterisiert;
- Entnahme der der zu speichernden Ressource zugeordneten Identifikationsnummer aus einer zumindest teilweise einem Kodierer (ECD) zugeordneten Ressourcentabelle (RSC); und;
- Speicherung der Ressource anhand der zugeordneten Identifikationsnummer anstatt der Ressourcenbezeichnung in der geräteinternen Datenbank (TS1).

10. Verfahren nach Patentanspruch 9, **dadurch gekennzeichnet, dass** bei Entgegennahme einer Anforderung, bei der die Ressource anstatt einer Ressourcenbezeichnung einen Datenwert enthält, dieser Datenwert mit einer Beschreibung des Datentyps, insbesondere in einem EXI-Type-Encoding-Format, in der Datenbank (TS1) gespeichert wird.

11. Computerprogrammprodukt mit Mitteln zur Durchführung des Verfahrens nach einem der vorhergehenden Patentansprüche 9 und 10, wenn das Computerprogrammprodukt an einer Datenbankzugriffssteuerungseinheit (CTR) zur Ausführung gebracht wird.

## Claims

1. Device having a communication interface (IF), the device being set up for device-internal processing of data in a text format, the communication interface (IF) being set up for interchanging binary data according to EXI specifications, the device comprising:
- an encoder (ECD) for reciprocally converting the binary data into text format data, the encoder (ECD) being set up for associating resource descriptors with a respective identification number;
- a resource table (RSC) associated with the encoder (ECD) for associating a respective resource descriptor with a respective identification number;
- at least one device-internal database (TS1) for storing resources and the relationships thereof;
**characterized by**:
- at least one database access control unit (CTR) having access to the at least one database (TS1) and also to the resource table (RSC), the database access control unit (CTR) being set up for storing the identification number associated with the resource to be stored, instead of the resource descriptor, in the at least one device-internal database (TS1); and
- the database access control unit (CTR) being set up to be prompted by a read access operation to extract the identification number associated with the resource to be read from the database (TS1) and to transfer said identification number to the encoder (ECD).

2. Device according to Patent Claim 1, **characterized in that** the database access control unit (CTR) is set up to be prompted by a write access request to extract a resource descriptor associated with the write access request, to identify an identification number associated with the resource descriptor in the resource table (RSC) and to store this associated identification number in a field provided in the database (TS1) for the resource to be stored.

3. Device according to Patent Claim 2, **characterized in that** the database access control unit (CTR) is set up to create a new entry in the resource table (RSC) for the case of a resource descriptor that is unidentifiable in the resource table (RSC), which new entry enters the unidentifiable resource descriptor as a new resource descriptor and associates a new identification number with this new resource descriptor.

4. Device according to one of the preceding patent claims, **characterized in that** the text format is configured in an XML format.

5. Device according to one of the preceding patent claims, **characterized in that** the resources and the relationships thereof comprise at least one subject, at least one predicate and at least one object.

6. Device according to one of the preceding patent claims, **characterized in that** the database (TS1) is a triple store.

7. Device according to one of the preceding patent claims, **characterized by** the database (TS1), which stores resources, particularly objects, that contain a data value instead of a resource descriptor, as a data value with a description of the data type in the database (TS1).

8. Device according to Patent Claim 7, **characterized in that** the description of the data type is provided in an EXI type encoding format.

9. Method for controlling database access, in a device that is set up for device-internal processing of data in a text format according to one of Claims 1-8, comprising the following steps:
- acceptance of a request for storing a resource in a device-internal database (TS1), wherein the request characterizes the resource on the basis of a resource descriptor in a text format;
- extraction of the identification number associated with the resource to be stored from a resource table (RSC) associated at least to some extent with an encoder (ECD); and
- storage of the resource on the basis of the associated identification number, instead of the resource descriptor, in the device-internal database (TS1).

10. Method according to Patent Claim 9, **characterized in that** acceptance of a request for which the resource contains a data value instead of a resource descriptor prompts this data value to be stored in the database (TS1) with a description of the data type, particularly in an EXI type encoding format.

11. Computer program product having means for performing the method according to either of preceding Patent Claims 9 and 10 when the computer program product is executed on a database access control unit (CTR).

## Revendications

1. Appareil avec une interface de communication (IF), l'appareil étant conçu pour un traitement interne à l'appareil de données dans un format de texte, l'interface de communication (IF) étant conçue pour échanger des données binaires selon des spécifications EXI, l'appareil comprenant :
- un codeur (ECD) pour la conversion réciproque des données binaires en données au format de texte, le codeur (ECD) étant conçu pour attribuer des désignations de ressources avec un numéro d'identification respectif ;
- un tableau de ressources (RSC) attribué au codeur (ECD) pour attribuer une désignation de ressource respective avec un numéro d'identification respectif ;
- au moins une base de données (TS1) interne à l'appareil pour sauvegarder des ressources et leurs désignations ;
**caractérisé par** :
au moins une unité de commande d'accès à la base de données (CTR) avec accès à l'au moins une base de données (TS1) et au tableau de ressources (RSC), l'unité de commande d'accès à la base de données (CTR) étant conçue pour sauvegarder le numéro d'identification attribué à la ressource à sauvegarder au lieu de la désignation de la ressource dans l'au moins une base de données interne à l'appareil (TS1) ; et
en ce que l'unité de commande d'accès à la base de données (CTR) est conçue de manière à extraire de la base de données (TS1) le numéro d'identification attribué à la ressource à lire en cas d'accès en lecture et à le transférer au codeur (ECD).

2. Appareil selon la revendication 1, **caractérisé en ce que** l'unité de commande d'accès à la base de données (CTR) est conçue pour extraire une désignation de ressource attribuée à la requête d'accès en écriture en cas de requête d'accès en écriture, identifier dans le tableau de ressources (RSC) un numéro d'identification attribué à la désignation de ressource et sauvegarder ce numéro d'identification attribué dans un champ, prévu dans la base de données (TS1), pour la ressource à sauvegarder.

3. Appareil selon la revendication 2, **caractérisé en ce que** l'unité de commande d'accès à la base de données (CTR) est conçue de manière telle qu'est créée, dans le tableau de ressources (RSC) dans le cas d'une désignation de ressource ne devant pas être identifiée dans le tableau de ressources (RSC), une nouvelle entrée par laquelle la désignation de ressource ne devant pas être identifiée est introduite en tant que nouvelle désignation de ressource et qu'à cette nouvelle désignation de ressource est attribué un nouveau numéro d'identification.

4. Appareil selon l'une des revendications précédentes, **caractérisé en ce que** le format de texte est réalisé dans un format XML.

5. Appareil selon l'une des revendications précédentes, **caractérisé en ce que** les ressources et leurs relations comprennent au moins un sujet, au moins un prédicat et au moins un objet.

6. Appareil selon l'une des revendications précédentes, **caractérisé en ce que** la base de données (TS1) est un Triplestore.

7. Appareil selon l'une des revendications précédentes, **caractérisé par** la base de données (TS1) dans laquelle sont sauvegardées, en tant que valeur de données avec une description du type de données dans la base de données (TS1), des ressources, et plus particulièrement des objets qui contiennent une valeur de données au lieu d'une désignation de ressource.

8. Appareil selon la revendication 7, **caractérisé en ce que** la description du type de données est effectuée dans un format d'encodage de type EXI.

9. Procédé de commande d'un accès à une base de données dans un appareil selon l'une des revendications 1-8 conçu pour un traitement interne à l'appareil de données dans un format de texte, comprenant les étapes suivantes :
- acceptation d'une requête de sauvegarde d'une ressource dans une base de données interne à l'appareil (TS1), la requête caractérisant la ressource à l'aide d'une désignation de ressource dans un format de texte ;
- extraction du numéro d'identification attribué à la ressource à sauvegarder hors d'un tableau de ressources (RSC) attribué au moins en partie à un codeur (ECD) ; et
- sauvegarde de la ressource à l'aide du numéro d'identification attribué au lieu de la désignation de ressource dans la base de données interne à l'appareil (TS1).

10. Procédé selon la revendication 9, **caractérisé en ce que**, en cas d'acceptation d'une requête dans laquelle la ressource contient une valeur de données au lieu d'une désignation de ressource, cette valeur de données est sauvegardée avec une description du type de données, en particulier dans un format d'encodage de type EXI dans la base de données (TS1).

11. Produit de programme informatique comportant des moyens pour exécuter le procédé selon l'une des revendications précédentes 9 et 10 lorsque le produit de programme informatique est mis à exécution sur une unité de commande d'accès à la base de données (CTR).
